# EUROPEAN PATENT SPECIFICATION

(11) **EP 2 308 939 B1**
(45) Date of publication and mention of the grant of the patent: **22.06.2016**
(21) Application number: 08876577.1
(22) Date of filing: 18.11.2008
(51) Int. Cl.: C09J 175/04, C09J 175/06, C08G 18/79, C08G 18/42

(54) **POLYURETHANE ADHESIVE FOR OUTDOOR USE**
POLYURETHANKLEBSTOFF ZUM EINSATZ IM FREIEN
ADHÉSIF POLYURÉTHANE POUR UNE UTILISATION EN EXTÉRIEUR

(30) Priority: 16.07.2008 JP 2008184812
(43) Date of publication of application: 13.04.2011
(73) Proprietor: Toyo Ink Mfg. Co. Ltd., Tokyo 104-0031 (JP)
(72) Inventor: YASUI, Bungo, Tokyo 104-0031 (JP); MAEDA, Seiji, Tokyo 104-0031 (JP); SUGI, Hiroki, Tokyo 104-0031 (JP); SHIMADA, Kenshiro, Tokyo 104-0031 (JP)
(74) Representative: Schwabe - Sandmair - Marx
(86) International application number: PCT/JP2008/070939
(87) International publication number: WO 2010/007697

(56) References cited:
- EP-A1- 0 622 437
- WO-A1-2008/149641
- JP-A- 7 179 553
- JP-A- 8 060 131
- JP-A- 11 080 699
- JP-A- 2002 249 745
- JP-A- 2007 136 911

## Description

### TECHNICAL FIELD

The present invention relates to a polyurethane adhesive or polyurethane type adhesive that is suitable for outdoor industrial applications.

### BACKGROUND ART

In recent years, laminated films produced by bonding a metal foil, metal sheet or metal deposition film of aluminum, copper or steel or the like to a plastic film such as a polypropylene, polyvinyl chloride, polyester, fluororesin or acrylic resin are increasingly being used as multilayer (composite) films for outdoor industrial applications, for example as barrier materials, roofing materials, solar cell panel materials, window frame materials, outdoor flooring materials, light-blocking materials, automobile members, signboards and stickers and the like. Examples of known adhesives used for bonding the metal foil, metal sheet or metal deposition film to the plastic film within these multilayer films include polyepoxy adhesives and polyurethane adhesives.

Japanese Patent Laid-Open No. H10-218978 (Patent Document 1) discloses a balanced polyester resin that is able to provide excellent initial cohesive strength and excellent adhesion and the like, and a polyurethane resin adhesive that uses the polyester resin.

Japanese Patent Laid-Open No. H06-116542 (Patent Document 2) discloses a polyurethane adhesive that exhibits excellent hot water resistance during the retort sterilization conducted for food packaging.

Japanese Patent Laid-Open No. 2008-4691 (Patent Document 3) discloses the use of a polyurethane adhesive having hydrolysis resistance within a sheet for sealing the back surface of a solar cell.

Moreover, Japanese Patent Laid-Open No. 2007-136911 (Patent Document 4) discloses a sheet for sealing the back surface of a solar cell that comprises an adhesion improvement layer formed of a polyester resin or polyester polyurethane resin.

Document WO-A 2008/149 641 which is a document pursuant to Article 54 (3) EPC relates to a solventless laminating adhesive comprising a polyisocyanate component or a polyol component, both of which are free from polyol components exhibiting crystalline properties at ordinary temperatures.

Document EP-A 0 622 437 relates to a polyurethane adhesive composition prepared by incorporating phosphorus oxy acid or a derivative thereof, an amine compound and an epoxy resin into an organic polyisocyanate and an organic polyol. It relates to a polyurethane adhesive composition in the manufacture of composite films by lamination of various plastic films, metal foils and so forth, which is excellent in adhesive properties, acid resistance and hot water resistance.

Document JP-A 8 060 131 relates to a composition containing (A) a polyol component which is an organic polymer polyol selected from polyester polyols, polyether ester polyols and polyurethane polyols and (B) an organic polyisocyanate component comprising a bifunctional polyisocyanate compound or a tri- or a polyfunctional polyisocyanate compound.

### DISCLOSURE OF INVENTION

In recent years, initiatives for countering global warming have become increasingly important, and in this regard, the development and supply of materials having long-term durability can be related directly to resource conservation, thereby aiding environ-menttal preservation.

However, with adhesives of the conventional technology described above, outdoor exposure tends to cause a gradual deterioration in the adhesive strength over time due to hydrolysis and the like, meaning a high level of adhesive strength cannot be maintained over long periods. As a result, external appearance defects and delamination tend to occur, resulting in a deterioration in the barrier properties relative to water vapor and the like, and a loss in the functionality of the multilayer film.

Accordingly, an object of the present invention is to provide an adhesive for which deterioration in the adhesive strength over time upon outdoor exposure is suppressed, meaning a high level of adhesive strength can be maintained over long periods.

The present invention relates to a polyurethane adhesive or a polyurethane type adhesive (hereinafter referred to simply as "polyurethane adhesive") for outdoor use that uses a base material and a curing agent, wherein the base material comprises a polyol (A) composed of a polyester polyol and polyester polyurethane polyol containing a dibasic acid component comprising 40 to 80 mol% of an aromatic dibasic acid and 20 to 60 mol% of an aliphatic dibasic acid having 9 or more carbon atoms, and a polyhydric alcohol component comprising 20 to 100 mol% of an aliphatic polyhydric alcohol having 5 or more carbon atoms, wherein the polyester polyol and the polyester polyurethane polyol are present as a mixture, and the curing agent comprises a polyisocyanate (B) containing an isocyanurate in a weight ratio of 50 to 100%; wherein said polyol A composed of a polyester polyol and a polyester polyurethane polyol and the polyisocyanate (B) are present such that, relative to the total number of hydroxyl groups within the polyol (A), the equivalence ratio for the isocyanate groups within the polyisocyanate (B) is within a range of from 1.0 to 10.0; and wherein the base material comprises polyols besides the polyol (A), said polyol (A) being present in an amount of at least 90 % by weight of the polyol component, and may optionally comprise at least one component selected from the group consisting of an epoxy resin in an amount of not more than 50 % by weight, relative to the total weight of the base material, a silane coupling agent in an amount of from 0.5 to 5 % by weight, relative to the total weight of the base material, and a conventional additive for adhesives.

### BEST MODE FOR CARRYING OUT THE INVENTION

The present invention uses a polyol (A) composed of a polyester polyol and polyester polyurethane polyol, which contains a combination of an aromatic dibasic acid and an aliphatic dibasic acid having not less than a specified number of carbon atoms, and an aliphatic polyhydric alcohol having not less than a specified number of carbon atoms, and a polyisocyanate (B) containing a specified amount of an isocyanurate. By employing this composition, the present invention can provide a polyurethane adhesive in which the hydrolysis resistance of the polyol (A) that acts as the base material is enhanced, meaning deterioration in the adhesive strength over time upon outdoor exposure can be suppressed. Accordingly, the present invention is extremely suitable as an adhesive for multilayer films designed for outdoor industrial applications, enables the functionality of such multilayer films to be maintained over long periods, and inhibits the occurrence of delamination and external appearance defects.

More specifically, it is thought that by employing a composition that uses a specific dibasic acid and a specific polyhydric alcohol, the degree of ester bonding susceptible to hydrolysis within the polyol (A) that functions as the base material can be reduced, and that by also including highly heat-resistant isocyanurate structures within the polyisocyanate that acts as the curing agent, the cross-linking density can be increased and swelling of the resin under conditions of high temperature can be suppressed, meaning penetration of moisture into the resin is inhibited, enabling the moisture and heat resistance of the cured film of the adhesive to be increased.

The present invention provides a polyurethane adhesive that uses a base material and a curing agent, and may be either a so-called two-pot adhesive in which the base material and the curing agent are mixed together at the time of use, or a one-pot adhesive in which the base material and the curing agent have been premixed. An adhesive in which a plurality of base materials and/or a plurality of curing agents are mixed together at the time of use is also possible.

The base material comprises the polyol (A), which is composed of a polyester polyol and a polyester polyurethane polyol.

Examples of the dibasic acids and ester compounds thereof that constitute the polyol (A) include isophthalic acid, terephthalic acid, naphthalene dicarboxylic acid, phthalic anhydride, adipic acid, azelaic acid, sebacic acid, succinic acid, glutaric acid, tetrahydrophthalic anhydride, hexahydrophthalic anhydride, maleic anhydride, itaconic anhydride, and ester compounds thereof. These compounds may be combined as appropriate, but the combination must be selected so that, relative to the total amount of dibasic acid, the amount of aromatic dibasic acid represents 40 to 80 mol%, and the amount of the aliphatic dibasic acid having 9 or more carbon atoms represents 20 to 60 mol%. If the amount of the aromatic dibasic acid is less than 40 mol%, then there is a possibility that satisfactory heat resistance and viscoelasticity may be unattainable, whereas if the amount exceeds 80 mol%, then there is a possibility that the adhesive strength may deteriorate. Further, if the aliphatic dibasic acid is composed of a compound having 8 or fewer carbon atoms, or the amount of the aliphatic dibasic acid having 9 or more carbon atoms is less than 20 mol%, then the degree of ester bonding within the polyol (A) may increase, resulting in an increase in the number of hydrolysis sites, which has an adverse effect on the long-term moisture and heat resistance.

Among the compounds listed above, from the viewpoint of achieving favorable reactivity within a transesterification reaction, terephthalic acid, dimethyl terephthalate, isophthalic acid and phthalic anhydride are preferred as the aromatic dibasic acid. In the case of the aliphatic dibasic acid having 9 or more carbon atoms, from the viewpoints of ensuring a high level of lipophilicity and favorable hydrophobicity, thereby inhibiting absorption of water by the polymer, azelaic acid which contains 9 carbon atoms and sebacic acid which contains 10 carbon atoms are preferred. Aliphatic dibasic acids having 11 or more carbon atoms tend to exhibit a strong aromatic odor, which should preferably be considered in terms of the operating environment.

Specific examples of the polyhydric alcohol include ethylene glycol, diethylene glycol, triethylene glycol, propylene glycol, dipropylene glycol, 1,6-hexanediol, neopentyl glycol, 1,4-butylene glycol, 1,4-cyclohexanedimethanol, trimethylolpropane, glycerol, 1,9-nonanediol and 3-methyl-1,5-pentanediol. These compounds may be used individually, or two or more compounds may be used in combination, provided that relative to the total amount of polyhydric alcohol, the proportion of the aliphatic polyhydric alcohol having 5 or more carbon atoms is at least 20 mol%. If the aliphatic polyhydric alcohol is composed of an alcohol of 4 or fewer carbon atoms, or the proportion of the aliphatic polyhydric alcohol having 5 or more carbon atoms is less than 20 mol%, then there is a possibility that the degree of ester bonding within the polyol (A) may increase, resulting in an increase in the number of hydrolysis sites, which has an adverse effect on the long-term moisture and heat resistance.

Of the compounds listed above, the aliphatic polyhydric alcohol having 5 or more carbon atoms is preferably a compound having a side chain, which improves the dissolution stability, such as neopentyl glycol of 5 carbon atoms or 3-methyl-1,5-pentanediol of 6 carbon atoms, or a compound having a high level of lipophilicity and favorable hydrophobicity which inhibits water absorption by the polymer, such as 1,6-hexanediol or the like.

In terms of ensuring satisfactory levels of cohesion and adhesive strength, the weight average molecular weight of the polyester polyol is preferably not less than 10,000, whereas in terms of achieving favorable resin solubility and viscosity, and satisfactory coating properties (handling properties) for the adhesive, the weight average molecular weight is preferably not more than 150,000, and is more preferably within a range from 10,000 to 100,000.

There are no particular limitations on the organic diisocyanate used for reacting with the polyester polyol to synthesize a polyester polyurethane polyol, and conventional raw materials may be used. Specific examples include 2,4-tolylene diisocyanate, 2,6-tolylene diisocyanate, xylylene diisocyanate, diphenylmethane diisocyanate, isophorone diisocyanate, 1,5-naphthalene diisocyanate, hexamethylene diisocyanate and hydrogenated diphenylmethane diisocyanate. These compounds may be used individually, or two or more compounds may be used in combination. Of these compounds, because the adhesive is for outdoor applications, the use of an aliphatic or alicyclic isocyanate compound for the urethane cross-linking sites is preferable in terms of reducing yellowing of the adhesive over time.

By subjecting the polyester polyol to urethanization prior to use, the degree of ester bonding (described below) within the polyol itself can be reduced, and as a result, the number of potential hydrolysis sites is reduced, and the moisture and heat resistance can be improved.

For the same reasons as those described above for the polyester polyol, the weight average molecular weight of the polyester polyurethane polyol is preferably within a range from 10,000 to 100,000, and more preferably from 10,000 to 70,000.

As the polyol (A), although either of the above-mentioned polyester polyol and polyester polyurethane polyol may be used individually, the present invention makes use of a mixture of the two, in terms of achieving a favorable balance between the adhesive strength and the moisture and heat resistance. In such cases, there are no particular limitations on the mixing ratio between the polyester polyol and the polyester polyurethane polyol, but in those cases where a polyester polyol having a weight average molecular weight of 70,000 or greater, which exhibits a high level of cohesive strength and superior stretch properties, is used in order to increase the adhesive strength, the proportion of this polyester polyol is preferably within a range from 60 to 80% by weight relative to the total weight of the polyol (A). In such cases, because the weight average molecular weight of the polyester polyol is high, resulting in a high viscosity, the weight average molecular weight of the polyester polyurethane polyol that is used in combination is preferably restricted to not more than 40,000 in order to regulate the viscosity of the adhesive to obtain favorable coating properties.

Moreover, the adhesive is preferably designed so that the proportion of ester bonding within the polyol (A), which is caused by a reaction between a carboxyl group and a hydroxyl group (wherein the reaction ratio between the carboxyl group and the hydroxy group is 1:1), expressed as the degree of ester bonding (mol/100 g) within the molecule, is less than 1. In other words, according to the findings of the inventors of the present invention, restricting the degree of ester bonding to less than 1 reduces the proportion of ester bonding and increases the hydrolysis resistance, and as a result, deterioration in the adhesive strength over time can be further suppressed, and the long-term moisture and heat resistance can be improved.

For example, by selecting a dibasic acid having a high molecular weight (a large number of carbon atoms) from among the various polybasic acids, the degree of ester bonding per unit weight (per 100 g) can be reduced. Aliphatic dibasic acids having 9 or more carbon atoms are particularly desirable, and specific examples include azelaic acid which contains 9 carbon atoms, and sebacic acid which contains 10 carbon atoms. If an aliphatic dibasic acid having approximately 15 or more carbon atoms is used, then the proportion of aliphatic carbon chains that constitute the soft segment within the adhesive increases, and the heat resistance of the adhesive tends to deteriorate, which would require other designing to provide the required heat resistance.

In addition, the degree of ester bonding per unit weight (per 100 g) of the polyol (A) can be further reduced by selecting a polyhydric alcohol having a high molecular weight (a large number of carbon atoms). Aliphatic polyhydric alcohols having 5 or more carbon atoms are preferable, and specific examples include neopentyl glycol of 5 carbon atoms, and 3-methyl-1,5-pentanediol and 1,6-hexanediol of 6 carbon atoms. Linear polyhydric alcohols having a large number of carbon atoms are frequently hydrophobic, and selecting such compounds can also be expected to provide a reduction in the degree of hydrophilicity of the molecular chain. However, if an aliphatic polyhydric alcohol of approximately 10 or more carbon atoms is used, then in a similar manner to that described above, other designing would be required to provide the required heat resistance.

In particular, considering the basic properties required of an industrial adhesive such as achieving a combination of good adhesive strength at room temperature and good adhesive strength under conditions of high temperature (such as 80 to 150°C), the degree of ester bonding within the polyol (A) is preferably within a range from 0.75 to 0.99. Ensuring a degree of ester bonding of not less than 0.75 means that, as prescribed in the present invention, the proportion within the dibasic acid component of the aromatic dibasic acid, which is the component that provides the necessary heat resistance, is appropriate, and the molecular weight of the polyhydric alcohol is also appropriate.

In the case of adhesives designed for retort pouches for foodstuff applications, there are known examples in which a carboxylic anhydride is reacted with hydroxyl groups at the polyol terminals to effect acid modification. However, according to investigations conducted by the inventors of the present invention, this acid modification caused a reduction in the long-term moisture and heat resistance, and was therefore deemed unsuitable for adhesives for outdoor applications. In other words, this type of acid modification that is suitable for adhesives designed for retort pouches tends to promote hydrolysis over time of the ester bonds upon exposure to outdoor conditions, and therefore in the present invention which is designed for outdoor use, the acid value (mg KOH/g) of the polyol (A) is preferably not more than 5, and more preferably 2 or less.

The base material may also include other optional components in addition to the above polyol (A), provided these other components do not impair the effects of the present invention. Polyols besides the polyol (A) may be included as part of the polyol component within the base material, but the polyol (A) preferably represents at least 90% by weight of the polyol component.

From the viewpoint of the hydrolysis resistance, the base material preferably includes an epoxy resin, and by reacting with the carboxyl groups generated as a result of hydrolysis of ester bonds, the epoxy groups can be expected to enable better control of any reduction in molecular weight. In such cases, in terms of maintaining satisfactory shear strength, it is preferable that an aromatic epoxy resin, rather than an aliphatic epoxy resin, is added to the base material. Of such resins, bisphenol epoxy resins such as bisphenol A epoxy resins and bisphenol F epoxy resins are preferred. Bisphenol epoxy resins possess hydrophobicity as a result of their bisphenol skeleton, and can therefore be expected to suppress the hydrolysis of ester bonds. These epoxy resins may be used individually, or two or more resins may be combined as appropriate.

Moreover, in terms of regulating the heat resistance and viscoelasticity of the cured film of the adhesive and adjusting the viscosity of the adhesive solution, a bisphenol epoxy resin having a number average molecular weight of 1,000 to 3,000 is preferred. If the number average molecular weight is less than 1,000, then there is a possibility that satisfactory heat resistance may be unobtainable, whereas if the number average molecular weight exceeds 3,000, then there is a possibility that the viscoelasticity of the adhesive may be lost. Further, in those cases where a high molecular weight polyol is used, a low molecular weight epoxy resin is able to lower the viscosity of the adhesive solution, thereby improving the coating properties, but if the number average molecular weight exceeds 3,000, then this effect of the epoxy resin in lowering the solution viscosity tends to diminish.

If an epoxy resin is added to the base material, then from the viewpoint of regulating the viscoelasticity of the cured film of the adhesive, the amount of the epoxy resin is preferably not more than 50% by weight relative to the total weight of the base material. In consideration of the resulting adhesive strength, a more appropriate range is from 20 to 40% by weight.

From the viewpoint of improving the adhesive strength to metal foils, the base material preferably includes a silane coupling agent. Examples of the silane coupling agent include trialkoxysilanes containing a vinyl group such as vinyltrimethoxysilane and vinyltriethoxysilane, trialkoxysilanes containing an amino group such as 3-aminopropyltriethoxysilane and N-(2-aminoethyl)-3-aminopropyltrimethoxysilane, and trialkoxysilanes containing a glycidyl group such as 3-glycidoxypropyltrimethoxysilane, 2-(3,4-epoxycyclohexyl)ethyltrimethoxysilane and 3-glycidoxypropyltriethoxysilane. These compounds may be used individually, or two or more compounds may be combined as appropriate.

The amount added of the silane coupling agent is preferably within a range from 0.5 to 5% by weight, and more preferably from 1 to 3% by weight, relative to the total weight of the base material. If the amount is less than 0.5% by weight, then the improvement in the adhesive strength to metal foils obtained by adding the silane coupling agent tends to be limited, whereas adding an amount exceeding 5% by weight yields no further improvement in performance.

Other conventional additives used for adhesives may also be included within the base material, and for example, reaction promoters can be used. Specific examples include metal-based catalysts such as dibutyltin diacetate, dibutyltin dilaurate, dioctyltin dilaurate and dibutyltin dimaleate, tertiary amines such as 1,8-diazabicyclo(5,4,0)undecene-7, 1,5-diazabicyclo(4,3,0)nonene-5 and 6-dibutylamino-1,8-diazabicyclo(5,4,0)undecene-7, and reactive tertiary amines such as triethanolamine. Any one or more reaction promoters selected from the above group may be used.

A conventional leveling agent or antifoaming agent may also be included within the base material for the purpose of improving the external appearance of the laminate.

Examples of the leveling agent include polyether-modified polydimethylsiloxanes, polyester-modified polydimethylsiloxanes, aralkyl-modified polymethylalkylsiloxanes, polyester-modified hydroxyl group-containing polydimethylsiloxanes, polyetherester-modified hydroxyl group-containing polydimethylsiloxanes, acrylic-based copolymers, methacrylic-based copolymers, polyether-modified polymethylalkylsiloxanes, alkyl acrylate ester copolymers, alkyl methacrylate ester copolymers and lecithin.

Examples of the antifoaming agent include conventional materials such as silicone resins, silicone solutions, and copolymers of alkyl vinyl ethers, alkyl acrylate esters and alkyl methacrylate esters.

Next is a description of the curing agent that is used in combination with the above-described base material.

The curing agent comprises the polyisocyanate (B) component. This polyisocyanate (B) component contains 50 to 100% by weight of an isocyanurate. Incorporating an isocyanurate within the polyisocyanate (B) enables the adhesive to exhibit favorable moisture and heat resistance over long periods.

From the viewpoint of suppressing yellowing of the resin over time, this isocyanurate preferably employs a compound derived from an aliphatic or alicyclic diisocyanate.

More specifically, examples of isocyanurates that have sufficient heat resistance to be effective in suppressing swelling of the resin and reducing water absorption by the polymer upon long-term exposure to high temperatures include isocyanurates formed from the alicyclic diisocyanate 3-isocyanatomethyl-3,5,5-trimethylcyclohexyl isocyanate (hereinafter referred to as "isophorone diisocyanate") and the aliphatic diisocyanate hexamethylene diisocyanate, and of these, the isocyanurate of isophorone diisocyanate is particularly preferable as it exhibits superior heat resistance. These isocyanurates are also preferred in terms of having a long pot life following mixing with the polyol (A), and exhibiting favorable solution stability.

Besides the above-mentioned isocyanurate, the polyisocyanate (B) may include other optional polyisocyanates in an amount of less than 50% by weight. Because the adhesive is designed for outdoor applications, aliphatic or alicyclic polyisocyanates that exhibit minimal yellowing are preferred.

Specifically, one or more polyisocyanates, for example, selected from among low-molecular weight polyisocyanates, polyurethane isocyanates obtained by reacting a low-molecular weight polyisocyanate with water or a polyhydric alcohol, and dimers of low-molecular weight isocyanates may be used in combination with the above isocyanurate.

Examples of low-molecular weight polyisocyanates include hexamethylene diisocyanate, phenylene diisocyanate, 2,4- or 2,6-tolylene diisocyanate, diphenylmethane-4,4-diisocyanate, 3,3-dimethyl-4,4-biphenylene diisocyanate, dicyclohexylmethane-4,4-diisocyanate, isophorone diisocyanate, and mixtures thereof. Examples of polyhydric alcohols which may be reacted with these low-molecular weight polyisocyanates include the same compounds as those listed above as one of the raw material for the precursor polyester polyol used in producing the above-mentioned polyester polyurethane polyol.

Besides the polyisocyanate (B) described above, the curing agent may also include other optional components, provided the inclusion of these other components does not impair the effects of the present invention. Examples of these other components include conventional oxazoline compounds such as 2,5-dimethyl-2-oxazoline and 2,2-(1,4-butylene)-bis(2-oxazoline), or hydrazide compounds such as isophthalic acid dihydrazide, sebacic acid dihydrazide and adipic acid dihydrazide.

The polyol (A) composed of a polyester polyol and/or a polyester polyurethane polyol, and the polyisocyanate (B) are preferably combined so that relative to the total number of hydroxyl groups within the polyol (A), the equivalence ratio for the isocyanate groups within the polyisocyanate (B) is within a range from 1.0 to 10.0.

Conventional methods can be employed to produce a multilayer film using the adhesive according to the present invention. For example, a comma coater or dry laminator may be used to apply the adhesive to one surface of a laminate substrate, the solvent removed from the adhesive by volatilization, another laminate substrate then bonded to the adhesive, and curing then performed either at ambient temperature or under heat. The amount of the adhesive applied to the surface of the laminate substrate is preferably within a range from approximately 1 to 50 g/m². The laminate substrates may be selected as desired in accordance with the intended application, and any appropriate number of substrates may be used. When producing a multilayer structure containing 3 or more layers, the adhesive according to the present invention can be used for bonding all or at least one of the layers.

### EXAMPLES

A more detailed description of the present invention is presented below using a series of examples. In the examples, the units "parts" and "%" refer to "parts by weight" and "% by weight" respectively.

### <Production of polyol A>

A reaction vessel was charged with 119.5 parts of dimethyl terephthalate, 92.2 parts of ethylene glycol, 72.2 parts of neopentyl glycol and 0.02 parts of zinc acetate, and the mixture was stirred under a stream of nitrogen while the temperature was raised to 160 to 210°C to effect a transesterification reaction. Following the removal by distillation of 97% of the theoretical volume of methanol, 93.0 parts of isophthalic acid and 130.0 parts of azelaic acid were added to the vessel, and an esterification reaction was performed by heating the mixture at 160 to 270°C. The pressure inside the reaction vessel was then gradually reduced to 1 to 2 Torr, and when the acid value reached 0.8 mg KOH/g or less, the reaction under reduced pressure was halted, yielding a polyester polyol having a weight average molecular weight of 80,000 (and a degree of ester bonding of 0.93 mol/100 g). A resin solution with a solid fraction of 50% obtained by diluting the polyester polyol with ethyl acetate was termed "polyol A".

### <Production of polyol B>

A reaction vessel was charged with 99.6 parts of dimethyl terephthalate, 92.2 parts of ethylene glycol, 72.2 parts of neopentyl glycol and 0.02 parts of zinc acetate, and the mixture was stirred under a stream of nitrogen while the temperature was raised to 160 to 210°C to effect a transesterification reaction. Following the removal by distillation of 97% of the theoretical volume of methanol, 77.5 parts of isophthalic acid and 129.6 parts of adipic acid were added to the vessel, and an esterification reaction was performed by heating the mixture at 160 to 240°C. The pressure inside the reaction vessel was then gradually reduced to 1 to 2 Torr, and when the acid value reached 0.8 mg KOH/g or less, the reaction under reduced pressure was halted, yielding a polyester polyol having a weight average molecular weight of 60,000 (and a degree of ester bonding of 1.03 mol/100 g). A resin solution with a solid fraction of 50% obtained by diluting the polyester polyol with ethyl acetate was termed "polyol B".

### <Production of polyol C>

A reaction vessel was charged with 59.8 parts of dimethyl terephthalate, 92.2 parts of ethylene glycol, 72.2 parts of neopentyl glycol and 0.02 parts of zinc acetate, and the mixture was stirred under a stream of nitrogen while the temperature was raised to 160 to 210°C to effect a transesterification reaction. Following the removal by distillation of 97% of the theoretical volume of methanol, 46.5 parts of isophthalic acid and 233.7 parts of azelaic acid were added to the vessel, and an esterification reaction was performed by heating the mixture at 160 to 270°C. The pressure inside the reaction vessel was then gradually reduced to 1 to 2 Torr, and when the acid value reached 0.8 mg KOH/g or less, the reaction under reduced pressure was halted, yielding a polyester polyol having a weight average molecular weight of 80,000 (and a degree of ester bonding of 0.91 mol/100 g). A resin solution with a solid fraction of 50% obtained by diluting the polyester polyol with ethyl acetate was termed "polyol C".

### <Production of polyol D>

A reaction vessel was charged with 38.4 parts of ethylene glycol, 153.1 parts of diethylene glycol, 224.1 parts of isophthalic acid and 84.5 parts of adipic acid, and the mixture was stirred under a stream of nitrogen while the temperature was raised to 160 to 240°C to effect an esterification reaction. The pressure inside the reaction vessel was then gradually reduced to 1 to 2 Torr, and when the acid value reached 0.8 mg KOH/g or less, the reaction under reduced pressure was halted, yielding a polyester polyol having a weight average molecular weight of 32,000 (and a degree of ester bonding of 0.93 mol/100 g). A resin solution with a solid fraction of 50% obtained by diluting the polyester polyol with ethyl acetate was termed "polyol D".

### <Production of polyol E>

A reaction vessel was charged with 94.2 parts of neopentyl glycol, 91.7 parts of 1,6-hexanediol, 37.6 parts of ethylene glycol, 211.5 parts of isophthalic acid and 122.9 parts of sebacic acid, and the mixture was stirred under a stream of nitrogen while the temperature was raised to 160 to 250°C to effect an esterification reaction. The pressure inside the reaction vessel was then gradually reduced to 1 to 2 Torr, and when the acid value reached 1 mg KOH/g or less, the reaction under reduced pressure was halted, yielding a precursor polyester polyol having a weight average molecular weight of 6,000. To the thus obtained polyester polyol was gradually added 22.9 parts of isophorone diisocyanate, and the resulting mixture was heated at 100 to 150°C while the reaction proceeded. Subsequent reaction for 6 hours yielded a polyester polyurethane polyol having a weight average molecular weight of 35,000 (and a degree of ester bonding of 0.79 mol/100 g). A resin solution with a solid fraction of 50% obtained by diluting the polyester polyurethane polyol with ethyl acetate was termed "polyol E".

### <Production of polyol F>

100 parts of the polyol A and 40 parts of the polyol E were mixed together under heat at 70°C, and a resin solution with a solid fraction of 50% obtained by diluting the resulting mixture with ethyl acetate was termed "polyol F".

### <Production of polyol G>

A reaction vessel was charged with 72.8 parts of ethylene glycol, 83.0 parts of isophthalic acid and 73.0 parts of adipic acid, and the mixture was stirred under a stream of nitrogen while the temperature was raised to 160 to 240°C to effect an esterification reaction. The pressure inside the reaction vessel was then gradually reduced to 1 to 2 Torr, and when the acid value reached 0.8 mg KOH/g or less, the reaction under reduced pressure was halted, yielding a polyester polyol having a weight average molecular weight of 32,000 (and a degree of ester bonding of 1.10 mol/100 g). A resin solution with a solid fraction of 50% obtained by diluting the polyester polyol with ethyl acetate was termed "polyol G".

### <Production of polyol H>

A reaction vessel was charged with 72.8 parts of ethylene glycol and 146.0 parts of adipic acid, and the mixture was stirred under a stream of nitrogen while the temperature was raised to 160 to 240°C to effect an esterification reaction. The pressure inside the reaction vessel was then gradually reduced to 1 to 2 Torr, and when the acid value reached 0.8 mg KOH/g or less, the reaction under reduced pressure was halted, yielding a polyester polyol having a weight average molecular weight of 35,000 (and a degree of ester bonding of 1.16 mol/100 g). A resin solution with a solid fraction of 50% obtained by diluting the.polyester polyol with ethyl acetate was termed "polyol H".

### <Production of polyol I>

A reaction vessel was charged with 58.3 parts of ethylene glycol, 24.4 parts of neopentyl glycol, 83.0 parts of isophthalic acid, 30.3 parts of sebacic acid and 51.1 parts of adipic acid, and the mixture was stirred under a stream of nitrogen while the temperature was raised to 160 to 240°C to effect an esterification reaction. The pressure inside the reaction vessel was then gradually reduced to 1 to 2 Torr. When the acid value reached 0.8 mg KOH/g or less, the reaction under reduced pressure was halted, yielding a polyester polyol having a weight average molecular weight of 35,000 (and a degree of ester bonding of 1.01 mol/100 g). A resin solution with a solid fraction of 50% obtained by diluting the polyester polyol with ethyl acetate was termed "polyol I".

### <Production of polyol J>

A reaction vessel was charged with 118.0 parts of 1,6-hexanediol and 202.0 parts of sebacic acid, and the mixture was stirred under a stream of nitrogen while the temperature was raised to 160 to 270°C to effect an esterification reaction. The pressure inside the reaction vessel was then gradually reduced to 1 to 2 Torr. When the acid value reached 0.8 mg KOH/g or less, the reaction under reduced pressure was halted, yielding a polyester polyol having a weight average molecular weight of 75,000 (and a degree of ester bonding of 0.70 mol/100 g). A resin solution with a solid fraction of 50% obtained by diluting the polyester polyol with ethyl acetate was termed "polyol J".

### <Base material 1> (Reference Example)

The resin solution of the polyol A was used, by itself, as a base material 1.

### <Base material 2> (Reference Example)

A resin solution with a solid fraction of 50% prepared by mixing and dissolving 140 parts of the polyol A and 30 parts of a bisphenol A epoxy resin (YD-012, manufactured by Tohto Kasei Co., Ltd., this also applies below) under heating at 70°C, and then diluting the resulting mixture with ethyl acetate, was used as a base material 2.

### <Base material 3> (Reference Example)

A resin solution with a solid fraction of 50% prepared by mixing and dissolving 140 parts of the polyol A, 30 parts of the bisphenol A epoxy resin and 3 parts of an epoxy group-containing organosilane coupling agent (KBE-403, manufactured by Shin-Etsu Chemical Co., Ltd., this also applies below) under heating at 70°C, and then diluting the resulting mixture with ethyl acetate, was used as a base material 3.

### <Base material 4> (Reference Example)

A resin solution with a solid fraction of 50% prepared by mixing and dissolving 140 parts of the polyol B, 30 parts of the bisphenol A epoxy resin and 3 parts of the epoxy group-containing organosilane coupling agent under heating at 70°C, and then diluting the resulting mixture with ethyl acetate, was used as a base material 4.

### <Base material 5> (Reference Example)

A resin solution with a solid fraction of 50% prepared by mixing and dissolving 140 parts of the polyol C, 30 parts of the bisphenol A epoxy resin and 3 parts of the epoxy group-containing organosilane coupling agent under heating at 70°C, and then diluting the resulting mixture with ethyl acetate, was used as a base material 5.

### <Base material 6> (Reference Example)

A resin solution with a solid fraction of 50% prepared by mixing and dissolving 200 parts of the polyol D and 3 parts of the epoxy group-containing organosilane coupling agent under heating at 70°C, and then diluting the resulting mixture with ethyl acetate, was used as a base material 6.

### <Base material 7> (Reference Example)

The resin solution of the polyol E was used, by itself, as a base material 7.

### <Base material 8> (Reference Example)

A resin solution with a solid fraction of 50% prepared by mixing and dissolving 200 parts of the polyol E and 3 parts of the epoxy group-containing organosilane coupling agent under heating at 70°C, and then diluting the resulting mixture with ethyl acetate, was used as a base material 8.

### <Base material 9> (Reference Example)

A resin solution with a solid fraction of 50% prepared by mixing and dissolving 140 parts of the polyol E, 30 parts of the bisphenol A epoxy resin and 3 parts of the epoxy group-containing organosilane coupling agent under heating at 70°C, and then diluting the resulting mixture with ethyl acetate, was used as a base material 9.

### <Base material 10>

A resin solution with a solid fraction of 50% prepared by mixing and dissolving 140 parts of the polyol F, 30 parts of the bisphenol A epoxy resin and 3 parts of the epoxy group-containing organosilane coupling agent under heating at 70°C, and then diluting the resulting mixture with ethyl acetate, was used as a base material 10.

### <Base material 11> (Reference Example)

A resin solution with a solid fraction of 50% prepared by mixing and dissolving 140 parts of the polyol G, 30 parts of the bisphenol A epoxy resin and 3 parts of the epoxy group-containing organosilane coupling agent under heating at 70°C, and then diluting the resulting mixture with ethyl acetate, was used as a base material 11.

### <Base material 12> (Reference Example)

A resin solution with a solid fraction of 50% prepared by mixing and dissolving 140 parts of the polyol H, 30 parts of the bisphenol A epoxy resin and 3 parts of the epoxy group-containing organosilane coupling agent under heating at 70°C, and then diluting the resulting mixture with ethyl acetate, was used as a base material 12.

### <Base material 13> (Reference Example)

A resin solution with a solid fraction of 50% prepared by mixing and dissolving 140 parts of the polyol I, 30 parts of the bisphenol A epoxy resin and 3 parts of the epoxy group-containing organosilane coupling agent under heating at 70°C, and then diluting the resulting mixture with ethyl acetate, was used as a base material 13.

### <Base material 14> (Reference Example)

A resin solution with a solid fraction of 50% prepared by mixing and dissolving 140 parts of the polyol J, 30 parts of the bisphenol A epoxy resin and 3 parts of the epoxy group-containing organosilane coupling agent under heating at 70°C, and then diluting the resulting mixture with ethyl acetate, was used as a base material 14.

The polyols A, E, F and I described above correspond with the composition of the polyol (A) prescribed above. Accordingly, the polyol-containing base materials 1 to 3 (containing the polyol A), base materials 7 to 9 (containing the polyol E), and base material 13 (containing the polyol I) represent base materials for Reference examples, and base material 10 (containing polyol F) represents a base material of the present invention.

The polyols listed below are not included within the scope of the polyol (A) of the present invention for the respective reasons described below.

Polyol B: the aliphatic dibasic acid is adipic acid, which contains 6 carbon atoms.

Polyol C: the blend amount of the aromatic dibasic acids (terephthalic acid and isophthalic acid) is less than 40 mol%.

Polyol D: the aliphatic dibasic acid is adipic acid, which contains 6 carbon atoms, and the aliphatic polyhydric alcohol is a mixture of diethylene glycol containing 4 carbon atoms and ethylene glycol containing 2 carbon atoms.

Polyols G and H: the aliphatic dibasic acid is adipic acid, which contains 6 carbon atoms, and the aliphatic polyhydric alcohol is ethylene glycol, which contains 2 carbon atoms.

### <Curing agent 1>

A resin solution with a solid fraction of 50% prepared by diluting a trimer of isophorone diisocyanate in ethyl acetate was used as a curing agent 1.

### <Curing agent 2>

A resin solution with a solid fraction of 50% prepared by diluting a trimer of hexamethylene diisocyanate in ethyl acetate was used as a curing agent 2.

### <Curing agent 3>

A resin solution with a solid fraction of 50% prepared by diluting, in ethyl acetate, an adduct of hexamethylene diisocyanate and trimethylolpropane was used as a curing agent 3.

### <Curing agent 4>

A resin solution with a solid fraction of 50% prepared by diluting, in ethyl acetate, an adduct of hexamethylene diisocyanate and water was used as a curing agent 4.

### <Curing agent 5>

A resin solution with a solid fraction of 50% prepared by mixing 100 parts of the curing agent 1 and 100 parts of the curing agent 3 at 70°C, and then diluting the resulting mixture with ethyl acetate, was used as a curing agent 5.

The above curing agents 1, 2 and 5 correspond with the polyisocyanate (B) prescribed in the present invention. On the other hand, the curing agents 3 and 4 contain no isocyanurate, and therefore do not correspond with the polyisocyanate (B) prescribed in the present invention.

### <Adhesive composition>

Each of the base materials and curing agents were mixed in a ratio of 100:14 (weight ratio), and the solid fraction was then adjusted to 30% by dilution with ethyl acetate to complete preparation of a series of adhesive solutions.

Table 1 lists the combinations used for Reference Examples 1 to 6 and 10, Examples 7 to 9 and Comparative Examples 1 to 8*.*

### <Performance test 1>

Using each of the adhesive solutions from the examples and comparative examples, a multilayer film (composite laminate material) was prepared by bonding a polyester film and an aluminum foil in the manner described below, and a performance test was then conducted in the manner described below.

The adhesive was applied to the polyester film: (Lumirror X-10S, manufactured by Toray Industries, Inc., thickness: 50 µm) with a dry laminator, in an amount sufficient to provide a coating amount of 4 to 5 g/m², and following volatilization of the solvent, the aluminum foil (thickness: 50 µm) was bonded to the adhesive. Subsequently, aging was performed for 7 days at 60°C, thereby curing the adhesive.

The thus obtained multilayer film was placed inside a glass bottle, the multilayer film was covered with distilled water, and the container was then sealed. The sealed bottle was held at 85°C for a period of 10 days, 20 days or 30 days.

After the standing period, the multilayer film was cut into pieces of size 200 mm × 15 mm, and after drying for 6 hours at room temperature, a T-type peel test was conducted at a load speed of 300 mm/minute, using a pull tester in accordance with the test method prescribed in ASTM D 1876-61. The peel strength (N/width 15 mm) between the polyester film and the aluminum foil was recorded as the average value of 5 test pieces.

### <Performance test 2>

Using each of the adhesive solutions from the examples and comparative examples, a multilayer film (composite laminate material) was prepared by bonding a polyester film, an aluminium foil and a fluorine-based film in the manner described below, and a performance test was then conducted in the manner described below.

The adhesive was applied to the polyester film: (E-5100, manufactured by Toyobo Co., Ltd., thickness: 100 µm) with a dry laminator, in an amount sufficient to provide a coating amount of 4 to 5 g/m², and following volatilization of the solvent, the aluminum foil (thickness: 50 µm) was bonded to the adhesive. Subsequently, the adhesive was applied to the aluminum foil with a dry laminator, in an amount sufficient to provide a coating amount of 4 to 5 g/m², and following volatilization of the solvent, a poly(vinylidene fluoride) film (Tedlar, manufactured by DuPont Corporation, thickness: 38 µm) was laminated to the adhesive. Aging was then performed for 7 days at 60°C, thereby curing the adhesive.

The thus obtained multilayer film was placed inside a constant temperature, constant humidity chamber, and was sealed in an atmosphere at 85°C and 85% RH. The film was left to stand inside the chamber for 1, 2, 3 or 4 months.

After the standing period, the multilayer film was cut into pieces of size 200 mm × 15 mm, and after drying for 6 hours at room temperature, a T-type peel test was conducted at a load speed of 300 mm/minute, using a pull tester in accordance with the test method prescribed in ASTM D1876-61. The peel strength (N/width 15 mm) between the polyester film and the aluminum foil and the peel strength (N/width 15 mm) between the aluminum foil and the poly(vinylidene fluoride) film were each recorded as the average value of 5 test pieces.

Each of the peel strength average values was evaluated against the 4-stage criteria listed below.
A: peel strength of at least 5 N/15 mm and no rupture of the laminate substrate (excellent practical applicability).
B: peel strength of 4 to 5 N/15 mm, interfacial peeling between the laminate substrate and the adhesive (practically applicable).
C: peel strength of 2 to 4 N/15 mm, interfacial peeling between the laminate substrate and the adhesive (the lower limit for practical applicability).
D: a peel strength of less than 2 N/15 mm, with cohesive failure of the adhesive.

The results of the above tests are summarized in Table 1.

In Table 1, Examples 1 to 6 and 10 are Reference Examples (*), and Examples 7 to 9 are Examples according to the invention.

**[Table 1]**

| | Base material number | Curing agent number | Adhesive strength (N/15 mm) after immersion in 85°C hot water | | | | Adhesive strength (N/l5 mm) after standing at 85°C and 85% RH | | | | | | | |
|---|---|---|---|---|---|---|---|---|---|---|---|---|---|---|
| | | | | | | | Between polyester film and Al foil | | | | Between Al foil and poly(vinylidene fluoride) film | | | |
| | | | Initial | After 10 days | After 20 days | After 30 days | Initial | After 1 month | After 2 months | After 3 months | Initial | After 1 month | After 2 months | After 3 months |
| Example 1* | 1 | 1 | 6.1 A | 5.0 B | 4.6 B | 3.0 C | 9.0 A | 8.0 A | 3.6 C | 2.7 C | 9.0 A | 8.8 A | 4.0 B | 3.7 C |
| Example 2* | 2 | 1 | 6.4 A | 6.2 A | 5.1 A | 4.0 B | 8.5 A | 7.6 A | 4.8 B | 3.2 C | 8.0 A | 8.2 A | 4.0 B | 3.7 C |
| Example 3* | 3 | 1 | 6.5 A | 6.5 A | 5.1 A | 4.2 B | 8.8 A | 7.8 A | 4.8 B | 3.4 C | 9.0 A | 8.6 A | 4.2 B | 4.1 B |
| Example 4* | 7 | 1 | 6.2 A | 6.0 A | 4.2 B | 3.8 C | 6.8 A | 6.0 A | 4.4 C | 2.8 C | 7.0 A | 7.0 A | 4.5 B | 3.5 C |
| Example 5* | 8 | 1 | 8.0 A | 6.0 A | 4.8 B | 3.5 C | 5.9 A | 5.5 A | 3.4 C | 3.6 C | 7.2 A | 7.0 A | 4.2 B | 4.0 B |
| Example 6* | 9 | 1 | 6.0 A | 5.2 A | 4.4 B | 4.1 B | 6.0 A | 5.5 A | 4.0 B | 4.6 B | 7.3 A | 7.1 A | 4.5 B | 4.5 B |
| Example 7 | 10 | 1 | 6.2 A | 6.0 A | 6.5 A | 5.6 A | 7.2 A | 6.4 A | 5.8 A | 5.1 A | 8.5 A | 8.3 A | 4.6 B | 4.4 B |
| Example 8 | 10 | 2 | 6.0 A | 6.2 A | 6.0 A | 5.4 A | 7.1 A | 6.4 A | 5.0 A | 4.4 B | 8.6 A | 8.6 A | 4.5 B | 4.2 B |
| Example 9 | 10 | 5 | 6.4 A | 5.5 A | 5.2 A | 4.2 B | 7.0 A | 6.3 A | 4.2 B | 3.0 C | 8.8 A | 8.6 A | 4.4 B | 4.1 B |
| Example 10* | 13 | 1 | 5.8 A | 5.2 B | 4.4 B | 3.1 C | 5.8 A | 5.0 A | 3.4 C | 2.4 C | 8.0 A | 7.2 A | 4.2 B | 3.7 B |
| Comparative example 1 | 4 | 1 | 5.3 A | 4.8 B | 3.2 C | 1.9 D | 8.5 A | 4.8 B | 1.2 D | 0.5 D | 9.2 A | 8.0 A | 3.5 C | 1.9 D |
| Comparative example 2 | 5 | 1 | 7.2 A | 2.2 C | 1.2 D | 0.2 D | 9.5 A | 2.8 C | 0.2 D | 0.0 D | 7.8 A | 7.2 A | 3.2 C | 1.5 D |
| Comparative example 3 | 6 | 1 | 6.2 A | 2.2 C | 1.2 D | 0.2 D | 9.0 A | 2.1 C | 0.2 D | 0.0 D | 9.0 A | 7.3 A | 3.3 C | 1.2 D |
| Comparative example 4 | 10 | 3 | 4.6 B | 4.2 B | 1.0 D | 0.2 D | 6.6 A | 4.6 B | 1.0 D | 0.8 D | 8.2 A | 7.0 A | 3.2 C | 1.6 D |
| Comparative example 5 | 10 | 4 | 4.5 B | 4.4 B | 2.2 C | 1.6 D | 6.6 A | 4.8 B | 1.8 D | 0.8 D | 8.3 A | 7.2 A | 3.1 C | 1.3 D |
| Comparative example 6 | 11 | 1 | 5.2 A | 4.2 B | 2.1 C | 1.0 D | 7.0 A | 4.2 B | 1.5 D | 0.6 D | 8.2 A | 6.2 A | 2.5 C | 1,4 D |
| Comparative example 7 | 12 | 1 | 3.5 C | 0.2 D | 0.1 D | 0.1 D | 3.2 C | 0.4 D | 0.0 D | 0.0 D | 3.2 C | 2.2 C | 1.8 D | 1.0 D |
| Comparative example 8 | 14 | 1 | 3.6 C | 3.0 C | 2.2 C | 1.6 D | 3.6 C | 3.1 C | 2.0 C | 1.0 D | 3.9 C | 3.6 C | 2.6 C | 0.4 D |

As shown in Table 1, the adhesives of the examples 7 to 9 exhibited excellent moisture and heat resistance, and were able to maintain favorable adhesive strength over long periods. Adhesives which combined a polyester polyol and a polyester polyurethane polyol, such as the adhesives of examples 7 to 9, exhibited particularly superior results, with a high level of adhesive strength observed after immersion in hot water and after exposure to high temperature and high humidity. The above test methods accelerate hydrolysis, and in terms of moisture and heat resistance, are considered to represent a more severe test than an outdoor exposure test in which the test piece is simply left to stand outdoors. Accordingly, it is surmised that the adhesives of these examples will exhibit excellent long-term moisture and heat resistance that is ideal for outdoor applications.

For example, JIS C 8917 (Environmental and endurance test methods for crystalline solar cell modules) prescribes a moisture resistance test B-2 in which a test piece is exposed to and withstands conditions of 85°C and 85% RH for 1,000 hours, and this test is known as a particularly severe test. The performance test 2 described above evaluates the resistance to exposure to conditions of 85°C and 85% RH for 2,000 hours or longer (24 hours × 90 days), and therefore the fact that a favorable result was able to be achieved in the performance test 2 means that the adhesives of these examples that exhibit long-term moisture and heat resistance will be ideal as the adhesive used between the sheets of a solar cell back surface protective sheet having a multilayer structure.

A solar cell back surface protective sheet that retains satisfactory interlayer adhesive strength (laminate strength) and undergoes no delamination between the sheet layers in the above type of long-term moisture and heat resistance test is able to protect the solar cell elements and maintain favorable electric power generation efficiency, and can also contribute to a lengthening of the life of the solar cell. Lengthening the life of solar cells leads to more widespread use of solar cell systems, which contributes to preservation of the environment from the viewpoint of providing an energy alternative to fossil fuels.

The adhesive according to the present invention can provide the high level of adhesive strength required of adhesives used for multilayer composite materials designed for outdoor industrial applications such as construction products (including barrier materials, roofing materials, solar cell panel materials, window frame materials, outdoor flooring materials, light-blocking materials and automobile members), is able to suppress deterioration in the adhesive strength over time caused by hydrolysis or the like that occurs upon outdoor exposure, and can maintain a high level of adhesive strength over long periods.

This Application is related to the subject matter disclosed in prior Japanese Application 2008-184812 filed on July 16, 2008.

It should be noted that various modifications and variations can be made in the aforementioned embodiments without departing from the novel and advantageous features of the present invention. Accordingly, the scope of the invention is determined by the appended claims.

## Claims

1. A polyurethane adhesive for outdoor use that uses a base material and a curing agent, wherein
- the base material comprises a polyol (A) composed of a polyester polyol and a polyester polyurethane polyol containing a dibasic acid component comprising 40 to 80 mol % of an aromatic dibasic acid and 20 to 60 mol % of an aliphatic dibasic acid having 9 or more carbon atoms and a polyhydric alcohol component comprising 20 to 100 mol % of an aliphatic polyhydric alcohol having 5 or more carbon atoms, wherein the polyester polyol and the polyester polyurethane polyol are present as a mixture; and
- the curing agent comprises a polyisocyanate (B) containing an isocyanurate in a weight ratio of 50 to 100 %; wherein
- said polyol A composed of a polyester polyol and a polyester polyurethane polyol and the polyisocyanate (B) are present such that, relative to the total number of hydroxyl groups within the polyol (A), the equivalence ratio for the isocyanate groups within the polyisocyanate (B) is within a range of from 1.0 to 10.0; and wherein
- the base material comprises polyols besides the polyol (A), said polyol (A) being present in an amount of at least 90 % by weight of the polyol component, and may optionally comprise at least one component selected from the group consisting of an epoxy resin in an amount of not more than 50 % by weight, relative to the total weight of the base material, a silane coupling agent in an amount of from 0.5 to 5 % by weight, relative to the total weight of the base material, and a conventional additive for adhesives.

2. The polyurethane adhesive for outdoor use according to claim 1, wherein the dibasic acid component is selected from one or two or more of the group consisting of isophthalic acid, terephthalic acid, naphthalene dicarboxylic acid, phthalic anhydride, adipic acid, azelaic acid, sebacic acid, succinic acid, glutaric acid, tetrahydrophthalic anhydride, hexahydrophthalic anhydride, maleic anhydride, itaconic anhydride, and ester compounds thereof, preferably wherein the dibasic acid component is selected from one or two or more of the group consisting of terephthalic acid, dimethyl terephthalate, isophthalic acid, phthalic anhydride, azelaic acid, and sebacic acid and ester compounds thereof.

3. The polyurethane adhesive for outdoor use according to claim 1 or claim 2, wherein the polyhydric alcohol is selected from one or two or more of the group consisting of ethylene glycol, diethylene glycol, triethylene glycol, propylene glycol, dipropylene glycol, 1,6-hexanediol, neopentyl glycol, 1,4-butylene glycol, 1,4-cyclohexane dimethanol, trimethylolpropane, glycerol,1,9-nonanediol, and 3-methyl-1,5-pentanediol, preferably wherein the polyhydric alcohol is selected from one or two or more of the group consisting of neopentyl glycol, 3-methyl-1,5-pentanediol and 1,6-hexanediol.

4. The polyurethane adhesive for outdoor use according to any of the claims 1 to 3, wherein the polyester polyol has a weight average molecular weight not less than 10,000, preferably no more than 150,000, more preferably within a range of from 10,000 to 100,000.

5. The polyurethane adhesive for outdoor use according to any of the claims 1 to 4, wherein the organic diisocyanate used to react the polyester polyol to a polyester polyurethane polyol is selected from one or two or more selected from the group consisting of 2,4-tolylene diisocyanate, 2,6-tolylene diisocyanate, xylylene diisocyanate, diphenylmethane diisocyanate, isophorone diisocyanate, 1,5-naphthalene diisocyanate, hexamethylene diisocyanate and hydrogenated diphenylmethane diisocyanate.

6. The polyurethane adhesive for outdoor use according to any of the claims 1 to 5, wherein the weight average molecular weight of the polyester polyurethane polyol is within a range of from 10,000 to 100,000, preferably within a range of from 10,000 to 70,000.

7. The polyurethane adhesive for outdoor use according to any of the claims 1 to 6, wherein, if a polyester polyol having a weight average molecular weight of 70,000 or greater is present in the polyol (A), its proportion is 60 to 80 % by weight, relative to the total weight of the polyol (A).

8. The polyurethane adhesive for outdoor use according to claim 7, wherein the weight average molecular weight of the polyester polyurethane polyol used in combination with the polyester polyol is not more than 40,000.

9. The polyurethane adhesive for outdoor use according to any of the claims 1 to 8, wherein the degree of ester bonding within the polyol (A) is less than 1, preferably is within a range of from 0.75 to 0.99.

10. The polyurethane adhesive for outdoor use according to any of the claims 1 to 9, wherein the base material further comprises an epoxy resin, preferably wherein the base material further comprises an aromatic epoxy resin, more preferably wherein the base material further comprises a bisphenol epoxy resin, even more preferably wherein the base material further comprises a bisphenol A epoxy resin or a bisphenol F epoxy resin, most preferably wherein the base material further comprises a bisphenol epoxy resin having a number average molecular weight of 1,000 to 3,000.

11. The polyurethane adhesive for outdoor use according to any of the claims 1 to 10, wherein the base material further comprises one or two or more silane coupling agent(s), preferably wherein the base material comprises at least one silane coupling agent in an amount of from 0.5 to 5 % by weight, more preferably wherein the base material further comprises at least one trialkoxysilane containing a vinyl group and/or at least one trialkoxysilane containing an amino group and/or at least one trialkoxysilane containing a glycidyl group, most preferably wherein the base material further comprises at least one silane coupling agent selected from the group consisting of vinyltrimethoxysilane, vinyltriethoxysilane, 3-aminopropyl triethoxysilane, N-(2-aminoethyl)-3-aminopropyltrimethoxysilane, 3-glycidoxypropyltrimethoxy-silane, 2-(3,4-epoxycyclohexyl-)ethyltrimethoxysilane and 3-glycidoxypropyltriethoxysilane.

## Patentansprüche

1. Polyurethan-Kleber für einen Gebrauch im Freien, der Gebrauch macht von einem Basis-Material und einem Härtungsmittel, worin
- das Basis-Material ein Polyol (A) umfasst, das zusammengesetzt ist aus einem Polyesterpolyol und einem Polyesterpolyurethanpolyol, enthaltend eine zweibasige Säure-Komponente umfassend 40 bis 80 Mol-% einer aromatischen zweibasigen Säure und 20 bis 60 Mol-% einer aliphatischen zweibasigen Säure mit 9 oder mehr Kohlenstoffatomen und eine mehrwertige Alkohol-Komponente umfassend 20 bis 100 Mol-% eines aliphatischen mehrwertigen Alkohols mit 5 oder mehr Kohlenstoffatomen, worin das Polyesterpolyol und das Polyesterpolyurethanpolyol als Mischung zugegen sind; und
- das Härtungsmittel ein Polyisocyanat (B) umfasst, das ein Isocyanurat in einem Gewichtsanteil von 50 bis 100 % enthält; worin
- das Polyol (A), das zusammengesetzt ist aus einem Polyesterpolyol und einem Polyesterpolyurethanpolyol, und das Polyisocyanat (B) derart zugegen sind, dass - bezogen auf die Gesamtzahl an Hydroxy-Gruppen innerhalb des Polyols (A) - das Äquivalenz-Verhältnis für die Isocyanat-Gruppen innerhalb des Polyisocyanats (B) innerhalb eines Bereichs von 1,0 bis 10,0 liegt; und worin
- das Basis-Material Polyole neben dem Polyol (A) umfasst, wobei das Polyol (A) zugegen ist in einer Menge von wenigstens 90 Gew.-% der Polyol-Komponente, und gegebenenfalls umfassen kann: wenigstens eine Komponente, die gewählt ist aus der Gruppe, die besteht aus einem Epoxy-Harz in einer Menge von nicht mehr als 50 Gew.-%, bezogen auf das Gesamtgewicht des Basis-Materials, ein Silan-Haftmittel in einer Menge von 0,5 bis 5 Gew.-% bezogen auf das Gesamtgewicht des Basis-Materials, und einen herkömmlichen Zusatzstoff für Kleber.

2. Polyurethan-Kleber für einen Gebrauch im Freien nach Anspruch 1, worin die zweibasige Säure-Komponente gewählt ist aus einer oder zwei oder mehr Komponenten aus der Gruppe bestehend aus Isophthalsäure, Terephthalsäure, Naphthalindicarbonsäure, Phthalsäureanhydrid, Adipinsäure, Azelainsäure, Sebacinsäure, Bernsteinsäure, Glutarsäure, Tetrahydrophthalsäureanhydrid, Hexahydrophthalsäureanhydrid, Maleinsäureanhydrid, Itaconsäureanhydrid und Esterverbindungen davon, vorzugsweise worin die zweibasige Säurekomponente gewählt ist aus einer oder zwei oder mehr Komponenten aus der Gruppe bestehend aus Terephthalsäure, Dimethylterephthalat, Isophthalsäure, Phthalsäureanhydrid, Azelainsäure und Sebacinsäure und Esterverbindungen davon.

3. Polyurethan-Kleber für einen Gebrauch im Freien nach Anspruch 1 oder Anspruch 2, worin der mehrwertige Alkohol gewählt ist aus einer oder zwei oder mehr Komponenten aus der Gruppe bestehend aus Ethylenglykol, Diethylenglykol, Triethylenglykol, Propylenglykol, Dipropylenglykol, 1,6-Hexan-diol, Neopentylglykol, 1,4-Butylenglykol, 1,4-Cyclohexandimethanol, Trimethylolpropan, Glycerin, 1,9-Nonandiol und 3-Methyl-1,5-pentandiol, vorzugsweise worin der mehrwertige Alkohol gewählt ist aus einer oder zwei oder mehr Komponenten aus der Gruppe bestehend aus Neopent-ylglykol, 3-Methyl-1,5-pentandiol und 1,6-Hexandiol.

4. Polyurethan-Kleber für einen Gebrauch im Freien nach irgendeinem der Ansprüche 1 bis 3, worin das Polyesterpolyol ein Gewichtsmittel des Molekulargewichts nicht unter 10.000 aufweist, vorzugsweise nicht mehr als 150.000, noch mehr bevorzugt innerhalb eines Bereichs von 10.000 bis 100.000.

5. Polyurethan-Kleber für einen Gebrauch im Freien nach irgendeinem der Ansprüche 1 bis 4, worin das organische Diisocyanat, das zur Umsetzung des Polyesterpolyols zu einem Polyesterpolyurethanpolyol verwendet wird, gewählt ist aus einer oder zwei oder mehr Komponenten gewählt aus der Gruppe bestehend aus 2,4-Tolylendiisocyanat, 2,6-Tolylendiiso-cyanat, Xylylendiisocyanat, Diphenylmethandiisocyxanat, Isophorondiiso-cyanat, 1,5-Naphthalindiisocyanat, Hexamethylendiisocyanat und hydriertem Diphenylmethandiisocyanat.

6. Polyurethan-Kleber für einen Gebrauch im Freien nach irgendeinem der Ansprüche 1 bis 5, worin das Gewichtsmittel des Molekulargewichts des Polyesterpolyurethanpolyols innerhalb eines Bereichs von 10.000 bis 100.000 liegt, vorzugsweise innerhalb eines Bereichs von 10.000 bis 70.000.

7. Polyurethan-Kleber für einen Gebrauch im Freien nach irgendeinem der Ansprüche 1 bis 6, worin dann, wenn ein Polyesterpolyol mit einem Gewichtsmittel des Molekulargewichts von 70.000 oder mehr in dem Polyol (A) zugegen ist, sein Anteil 60 bis 80 Gew.-% ist, bezogen auf das Gesamtgewicht des Polyols (A).

8. Polyurethan-Kleber für einen Gebrauch im Freien nach Anspruch 7, worin das Gewichtsmittel des Molekulargewichts des Polyesterpolyurethanpolyols, das in Kombination mit dem Polyesterpolyol verwendet wird, nicht höher ist als 40.000.

9. Polyurethan-Kleber für einen Gebrauch im Freien nach irgendeinem der Ansprüche 1 bis 8, worin der Grad an Ester-Bindung innerhalb des Polyols (A) geringer ist als 1, vorzugsweise liegt innerhalb eines Bereichs von 0,75 bis 0,99.

10. Polyurethan-Kleber für einen Gebrauch im Freien nach irgendeinem der Ansprüche 1 bis 9, worin das Basis-Material weiter ein Epoxy-Harz umfasst; vorzugsweise worin das Basis-Material weiter ein aromatisches Epoxy-Harz umfasst; mehr bevorzugt worin das Basis-Material weiter ein Bisphenol Epoxy-Harz umfasst; sogar noch mehr bevorzugt worin das Basis-Material weiter ein Bisphenol A-Epoxy-Harz oder ein Bisphenol F-Epoxy-Harz umfasst; am meisten bevorzugt worin das Basis-Material weiter ein Bisphenol Epoxy-Harz mit einem Zahlenmittel des Molekulargewichts von 1.000 bis 3.000 umfasst.

11. Polyurethan-Kleber für einen Gebrauch im Freien nach irgendeinem der Ansprüche 1 bis 10, worin das Basis-Material weiter ein oder zwei oder mehr Silan-Haftmittel umfasst; vorzugsweise worin das Basis-Material wenigstens ein Silan-Haftmittel in einer Menge von 0,5 bis 5 Gew.-% umfasst; mehr bevorzugt, worin das Basis-Material weiter wenigstens ein eine Vinylgruppe enthaltendes Trialkoxysilan und/oder wenigstens ein eine Aminogruppe enthaltendes Trialkoxysilan und/oder wenigstens ein eine Glycidylgruppe enthaltendes Trialkoxysilan umfasst; am meisten bevorzugt, worin das Basismaterial weiter wenigstens ein Silan-Haftmittel umfasst, das gewählt ist aus der Gruppe, die besteht aus Vinyl-trimethoxysilan, Vinyltriethoxysilan, 3-Aminopropyltriethoxysilan, N-(2-Aminoethyl-)3-aminopropyltrimethoxysilan, 3-Glycidoxypropyltrimethoxysilan, 2-(3,4-Epoxycyclohexyl-)ethyltrimethoxysilan und 3-Glycidoxypropyltriethoxysilan.

## Revendications

1. Colle polyuréthane à usage extérieur qui utilise un matériau de base et un agent de durcissement, dans laquelle
- le matériau de base comprend un polyol (A) composé d'un polyester polyol et d'un polyester polyuréthane polyol contenant un composant acide dibasique comprenant 40 à 80 % en moles d'un acide dibasique aromatique et 20 à 60 % en moles d'un acide dibasique aliphatique ayant 9 atomes de carbone ou plus et un composant alcool polyhydrique comprenant 20 à 100 % en moles d'un alcool polyhydrique aliphatique ayant 5 atomes de carbone ou plus, le polyester polyol et le polyester polyuréthane polyol étant présents sous forme de mélange ; et
- l'agent de durcissement comprend un polyisocyanate (B) contenant un isocyanurate en un rapport en poids de 50 à 100 % ; dans laquelle
- ledit polyol (A) composé d'un polyester polyol et d'un polyester polyuréthane polyol et le polyisocyanate (B) sont présents de telle sorte que, par rapport au nombre total de groupes hydroxyle à l'intérieur du polyol (A), le rapport en équivalents pour les groupes isocyanate à l'intérieur du polyisocyanate (B) est dans une plage de 1,0 à 10,0 ; et dans laquelle
- le matériau de base comprend des polyols en plus du polyol (A), ledit polyol (A) étant présent en une quantité qui représente au moins 90 % en poids du composant polyol, et peut éventuellement comprendre au moins un composant choisi dans le groupe constitué par une résine époxy en une quantité de pas plus de 50 % en poids, par rapport au poids total du matériau de base, un agent de couplage au silane en une quantité de 0,5 à 5 % en poids, par rapport au poids total du matériau de base, et un additif traditionnel pour les colles.

2. Colle polyuréthane à usage extérieur selon la revendication 1, dans laquelle le composant acide dibasique est choisi parmi un ou deux éléments ou plus du groupe constitué par l'acide isophtalique, l'acide téréphtalique, l'acide naphtalène dicarboxylique, l'anhydride phtalique, l'acide adipique, l'acide azélaïque, l'acide sébacique, l'acide succinique, l'acide glutarique, l'anhydride tétrahydrophtalique, l'anhydride hexahydrophtalique, l'anhydride maléique, l'anhydride itaconique, et les composés esters de ceux-ci, de préférence dans laquelle le composant acide dibasique est choisi parmi un ou deux éléments ou plus du groupe constitué par l'acide téréphtalique, le diméthyltéréphtalate, l'acide isophtalique, l'anhydride phtalique, l'acide azélaïque, et l'acide sébacique et les composés esters de ceux-ci.

3. Colle polyuréthane à usage extérieur selon la revendication 1 ou la revendication 2, dans laquelle l'alcool polyhydrique est choisi parmi un ou deux éléments ou plus du groupe constitué par l'éthylène glycol, le diéthylène glycol, le triéthylène glycol, le propylène glycol, le dipropylène glycol, le 1,6-hexanediol, le néopentyl glycol, le 1,4-butylène glycol, le 1,4-cyclohexane diméthanol, le triméthylolpropane, le glycérol, le 1,9-nonanediol, et le 3-méthyl-1,5-pentanediol, de préférence dans laquelle l'alcool polyhydrique est choisi parmi un ou deux éléments ou plus du groupe constitué par le néopentyl glycol, le 3-méthyl-1,5-pentanediol et le 1,6-hexanediol.

4. Colle polyuréthane à usage extérieur selon l'une quelconque des revendications 1 à 3, dans laquelle le polyester polyol a une masse moléculaire moyenne en poids d'au moins 10 000, de préférence d'au plus 150 000, plus particulièrement de préférence dans une plage de 10 000 à 100 000.

5. Colle polyuréthane à usage extérieur selon l'une quelconque des revendications 1 à 4, dans laquelle le diisocyanate organique utilisé pour faire réagir le polyester polyol afin de synthétiser un polyester polyuréthane polyol est choisi parmi un ou deux éléments ou plus choisis dans le groupe constitué par le 2,4-tolylène diisocyanate, le 2,6-tolylène diisocyanate, le xylylène diisocyanate, le diphénylméthane diisocyanate, l'isophorone diisocyanate, le 1,5-naphtalène diisocyanate, l'hexaméthylène diisocyanate et le diphénylméthane diisocyanate hydrogéné.

6. Colle polyuréthane à usage extérieur selon l'une quelconque des revendications 1 à 5, dans laquelle la masse moléculaire moyenne en poids du polyester polyuréthane polyol est dans une plage de 10 000 à 100 000, de préférence dans une plage de 10 000 à 70 000.

7. Colle polyuréthane à usage extérieur selon l'une quelconque des revendications 1 à 6, dans laquelle si un polyester polyol ayant une masse moléculaire moyenne en poids de 70 000 ou plus est présent dans le polyol (A), sa proportion est de 60 à 80 % en poids, par rapport au poids total du polyol (A).

8. Colle polyuréthane à usage extérieur selon la revendication 7, dans laquelle la masse moléculaire moyenne en poids du polyester polyuréthane polyol utilisé en combinaison avec le polyester polyol est d'au plus 40 000.

9. Colle polyuréthane à usage extérieur selon l'une quelconque des revendications 1 à 8, dans laquelle le degré de liaison ester à l'intérieur du polyol (A) est inférieur à 1, de préférence est dans une plage de 0,75 à 0,99.

10. Colle polyuréthane à usage extérieur selon l'une quelconque des revendications 1 à 9, dans laquelle le matériau de base comprend en outre une résine époxy, de préférence dans laquelle le matériau de base comprend en outre une résine époxy aromatique, plus particulièrement de préférence dans laquelle le matériau de base comprend en outre une résine époxy bisphénol, plus encore de préférence dans laquelle le matériau de base comprend en outre une résine époxy bisphénol A ou une résine époxy bisphénol F, très particulièrement de préférence dans laquelle le matériau de base comprend en outre une résine époxy bisphénol ayant une masse moléculaire moyenne en nombre de 1 000 à 3 000.

11. Colle polyuréthane à usage extérieur selon l'une quelconque des revendications 1 à 10, dans laquelle le matériau de base comprend en outre un ou deux agent(s) de couplage au silane ou plus, de préférence dans laquelle le matériau de base comprend au moins un agent de couplage au silane en une quantité de 0,5 à 5 % en poids, plus particulièrement de préférence dans laquelle le matériau de base comprend en outre au moins un trialcoxysilane contenant un groupe vinyle et/ou au moins un trialcoxysilane contenant un groupe amino et/ou au moins un trialcoxysilane contenant un groupe glycidyle, très particulièrement de préférence dans laquelle le matériau de base comprend en outre au moins un agent de couplage au silane choisi dans le groupe constitué par le vinyltriméthoxysilane, le vinyltriéthoxysilane, le 3-aminopropyltriéthoxysilane, le N-(2-aminoéthyl)-3-aminopropyltriméthoxysilane, le 3-glycidoxypropyltriméthoxysilane, le 2-(3,4-époxycyclohexyl)-éthyltriméthoxysilane et le 3-glycidoxypropyltriéthoxysilane.
